# EUROPEAN PATENT APPLICATION

(11) **EP 4 613 103 A1**
(43) Date of publication of application: **10.09.2025**
(21) Application number: 25153911.0
(22) Date of filing: 24.01.2025
(51) Int. Cl.: A22C 21/00

(54) **DEVICE AND METHOD FOR CUTTING POULTRY MID-WINGS**

(30) Priority: 26.01.2024 NL 2036900
(71) Applicant: IFEC B.V., 3261 LK Oud-Beijerland (NL)
(72) Inventor: HAZENBROEK, Jacobus Eliza, 3261 LK Oud-Beijerland (NL); HAZENBROEK, David Scott, 3261 LK Oud-Beijerland (NL); STOOKER, Dirk Cornelis, 3261 LK Oud-Beijerland (NL); SLAGBOOM, Rijk, 3261 LK Oud-Beijerland (NL)
(74) Representative: Patentwerk B.V.

(57) **Abstract**

The invention relates to a device for cutting pieces of meat, preferably pieces of poultry, in particular poultry mid-wings, into separate portions. The invention also relates to a drive system for use or used in said device according to the invention. The invention further relates to a method for cutting pieces of meat, preferably pieces of poultry, in particular poultry mid-wings, into separate portions, preferably by making use of the device according to the invention.

## Description

The invention relates to a device for cutting pieces of meat, preferably pieces of poultry, in particular poultry mid-wings, into separate portions. The invention also relates to a drive system for use or used in said device according to the invention. The invention further relates to a method for cutting pieces of meat, preferably pieces of poultry, in particular poultry mid-wings, into separate portions, preferably by making use of the device according to the invention.

Over the past few decades, numerous machines have been developed to meet the global demand for large-scale poultry consumption. These machines aim to enhance various aspects of poultry processing, particularly focusing on improving the efficiency of producing different cuts of poultry meat. While these machines have proven highly effective for various cuts, certain poultry parts, in particular those parts having small and closely spaced bones, still require intricate manual manipulation for separation into smaller cuts. One such example is the mid-wing section of a poultry wing, situated between the larger, more muscular drumette section and the smaller, less muscular wingtip section. This mid-wing section contains two parallel bones, namely the radius and ulna, joined together at their ends by ligaments.

Although (poultry) mid-wing sections may be consumed as whole pieces it may be preferred to separate the radius bone and its surrounding components (referred to as the "radius portion") from the ulna bone and its surrounding elements (referred to as the "ulna portion"). This separation results in two distinct, smaller meat portions that are easier to consume, eliminating the need for consumers to manually separate the radius and ulna bones. Although this meat cutting process can be done manually, manual cutting is time-consuming, laborious, and poses certain safety and health risks. Therefore, the need exists for a device to overcome these drawbacks.

It is a first objective of the invention to provide a device for efficiently cutting pieces of meat, such as poultry mid-wing sections to separate the radius and ulna portions.

It is a second objective of the invention to provide a relatively simple device for efficiently cutting pieces of meat, such as poultry mid-wing sections to separate the radius and ulna portions.

It is a third objective of the invention to provide a device for efficiently cutting pieces of meat, such as poultry mid-wing sections to separate the radius and ulna portions, wherein the device allows for easy loading of the pieces of meat to be cut.

At least one of these objectives can be achieved by providing a device according to the preamble, comprising:
- at least one endless conveyor for transporting pieces of meat, preferably pieces of poultry, in particular poultry mid-wings, along a transport path,
- at least one cutting section arranged along the along the transport path of the endless conveyor, said cutting section comprising at least one movable cutting element for cutting pieces of meat transported along the transport path into separate portions, wherein at least one cutting element is preferably at least movable in a direction having at least a directional component perpendicular to the transport path,
- at least one first intermittent-motion drive system for intermittently driving the endless conveyor.

The device according to the invention is configured to mechanically cut pieces of meat, which eliminates the need of manual cutting pieces of meat. Moreover, the device is configured to intermittently drive the endless conveyor, which means that the endless conveyor will be operated in a start-stop manner rather than continuously, wherein the pieces of meat (to be) cut are moved along a predetermined transport path, but the motion is intermittent, with periods of movement followed by periods of rest or stoppage.

In the context of this patent document, an intermittently driven conveyor would be a conveyor that advances in a series of intermittent steps. The conveyor moves pieces of meat or poultry, especially mid-wings, in a stop-and-go fashion, preferably synchronized with the cutting section, in particular the movement of the at least one cutting element, to ensure precise and controlled separation of the one or more pieces meat into distinct portions. The intermittent motion allows for accuracy in positioning the meat onto the conveyor as well as the cutting of the meat, contributing to the overall efficiency of the meat processing system. The first drive system is preferably configured to stepwise move the conveyor over a predefined distance and/or during a predefined time interval. This allows the meat to be cut to be(come) aligned with the cutting section to allow proper cutting of the meat.

Although the meat cutting device according to the invention may be used to cut various meat species, the meat cutting device is in particular designed to cut poultry meat, and in particular to cut poultry mid-wing sections to separate the radius and ulna portions.

In a preferred embodiment, the at least one movable cutting element is displaceable between an operational state, wherein the cutting element is configured to intersect the transport path and/or a part of the conveyor to cut meat into separate portions, and an non-operational state, wherein the cutting element is positioned at a distance from the transport path and/or a part of the conveyor. This movement allows an unhindered discharge of cut meat portions and positioning of one or more other pieces of meat to be cut with respect to the cutting section. As mentioned above, at least one cutting element is preferably at least movable in a direction having at least a directional component perpendicular to the transport path. It is imaginable that the moving direction of the cutting element(s) is entirely perpendicular with respect to the conveyor. In case the transport path runs, for example, in horizontal direction, then it is imaginable that the cutting element(s) move in a vertical downward direction towards the conveyor during displacement towards the operational state, and/or wherein it is imaginable that the cutting element(s) move in vertical upward direction away from the conveyor during displacement towards the non-operational state. This implies that, according to this embodiment, the cutting element(s) is/are positioned above and at a distance from the transport path in the non-operational state of the cutting element(s).

Although it is imaginable that the at least one cutting element can be displaced manually, preferably according to a mechanically predefined path, it is commonly preferred that this movement is entirely automated and preferably synchronized with the intermittent movement of the conveyor. To this end, the device preferably comprises at least one second drive system for, preferably continuously or intermittently, moving the at least one cutting element between the operational state and the non-operational state. Preferably, the first drive system and the second drive system are configured to mutually synchronize the movement of the at least one cutting element and the intermittent movement of the endless conveyor. The synchronization of the movement of the conveyor and the movement of the cutting element(s) can be realized in a mechanical manner and/or in an electronic manner, for example by making use of a control unit programmed to discretely, semi-continuously, or continuously synchronize both movements. In case at least one control unit would be used to synchronize both movements, the control unit is preferably configured to synchronize the (operation and/or movement of the) first drive system and the (operation and/or movement of the) second drive system. It is conceivable that the device further comprises at least one sensor, for measuring one or more device properties. Said sensor may be communicatively connected to the control unit, such that the control unit is configured for controlling the drive system based on one or more sensors. At least one sensor may be a speed sensor, for example for measuring a rotational speed of the drive system and/or of the conveyor. At least one sensor may be a position sensor, such as an angular position sensor, a linear position sensor, a proximity sensor. At least one sensor may provide a continuous signal, however it is also conceivable that at least one sensor provides a signal in case the device is in a predetermined position.

Preferably, the first intermittent-motion drive system is configured to periodically, temporarily interrupt movement of the endless conveyor, and wherein the second drive system is configured to position the at least one cutting element into the operational state when the endless conveyor is in an interrupted state, and to position the at least one cutting element into the non-operational state if the endless conveyor is not in an interrupted state. This typically leads to a desired synchronization of both movements, wherein the meat can be cut into portions in a stationary state (interrupted state or non-moving state) of the conveyor, which is in favour of the accuracy of the meat cutting process.

It is imaginable that said first drive system and said second drive system are configured to mutually cooperate with each other and/or are at least partially integrated with each other. Each drive system may be driven by its own drive motor, in particular an electric drive motor. However, it is also imaginable and preferably that the drive systems are driven by the same drive motor, in particular the same electric drive motor. It is imaginable the first drive system and the second drive system are the same (shared) drive system, preferably driven by the same source, such as said (electric) drive motor.

Various types of endless conveyors may be used in the meat cutting device according to the invention. The device may comprise a plurality of endless conveyors of the same type and/or of different type.

At least one endless conveyor used in the device according to the invention may, for example, be a roller conveyor. Said roller conveyor comprises a series of rollers to move the meat along the transport path. In this embodiment, preferably a plurality of rollers are powered and optionally at least one other roller is non-powered. In this embodiment, the powered rollers are preferably axially rotated and/or blocked from rotation by the first drive system. Hence, the first drive system may be configured to intermittently drive the powered rollers.

Additionally or alternatively, another suitable endless conveyor to be used in the device according to the invention is an endless conveyor carousel, also referred to as carousel. This carousel is a type of conveyor system designed in a circular or oval shape. This conveyor configuration typically consists of a rotating platform or series of rotating carriers that move pieces of meat according to the annular path (circular path or oval path) to guide meat to be cut from a loading location via the cutting section to an unloading location.

Additionally or alternatively, another suitable, and typically a preferred, endless conveyor to be used in the device according to the invention is an endless belt conveyor. Such an endless belt conveyor preferably comprises at least one endless belt, such as a chain or a V-belt and/or a toothed belt, such as a notched or cogged belt, preferably at least two endless belts, such as at least two chains and/or a V-belt and/or a toothed belt, such as a notched or cogged belt,, oriented in parallel and preferably spaced apart. Here, each conveyor belt is normally a continuous loop which may be made of various materials, such as metal, plastic, rubber, and/or fabric. The width of said belt may be relatively small, such as less than 5 centimetre, such as smaller than 2 centimetre, or may be relatively large, such as at least 5 centimetre, preferably at least 10, 20, 30, 40, and/or 50 centimetre. In this latter case the belt is sufficiently wide to support, directly or indirectly, the pieces of meat to be cut. In case of one or more belts is/are applied with a narrow width, these belt are commonly used to mount one or more - typically wider - support elements for the meat to be cut. These support elements are also referred to as meat carriers.

Preferably, said endless belt conveyor comprises an upper run and a lower run, wherein intermediate space is defined between the upper run and the lower run, and wherein at least a part of said upper run defines the transport path of the pieces of meat. Preferably, said belt conveyor comprises at least one belt return device facilitating transitioning of the endless belt between the lower run and the upper run. Said belt return device comprises at least one guide sprocket, preferably at least one non-driven guide sprocket. Preferably, the endless belt conveyor comprises at least one at least one driven belt pulley, such as at least one driven (gear) wheel or driven sprocket to drive the endless belt. The driven sprocket(s) may make part of the belt return device, but may also be positioned at a distance from said belt return device. Preferably, the driven sprocket(s) is/are positioned within said intermediate space between the upper run and the lower run. The driven sprocket(s) typically makes part of the first drive system. Hence, preferably, at least a part of said at least one first intermittent-motion drive system is positioned within said intermediate space. Preferably, at least a part of said at least one first intermittent-motion drive system, such as the above mentioned driven sprocket (driven wheel), is configured to co-act with, in particular to intermittently drive, a lower side of said upper run of the endless belt conveyor. The driven sprocket is in this case also configured to support the upper run, which is in favour of the stabilization of the pieces of meat positioned onto the upper run. It is imaginable that the driven sprocket(s) is configured to simultaneously also co-act with the lower run. Alternatively, the drive sprocket(s) may be configured to co-act solely with the lower run rather than with the upper run.

It is preferable in case the device further comprises at least one retention element, preferably a driven retention element, for retaining the conveyor in an interrupted state. The retention element is configured to secure or lock the conveyor in the stopped state (interrupted state) in order to stabilize the conveyor, in particular the upper run, to consequently stabilize the pieces of meat to be cut. Preferably, at least a part of said at least one retention element is positioned within said intermediate space. This allows the retention element(s) to co-act with the endless conveyor, in particular the upper run (and/or lower run) of the endless belt conveyor (if applied) in order to prevent the conveyor from displacing during the cutting action of the cutting section. This positioning of the retention element(s) within the intermediate space also leads to a relatively compact construction which moreover reduces the safety risk of operating the device, as the retention element(s) is/are more or less shielded by the conveyor. Preferably, at least one retention element is configured to co-act with a lower side of the upper run of the conveyor and/or at least a part of at least one retention element is configured to be accommodated in one or more opening formed in the endless belt. In case the endless belt is for example formed by a chain, the chain typically comprises chain links which in include openings in which the retention element(s) could be placed to prevent movement of the chain. Analogously, in case the endless belt would be formed by a chain, the conveyor typically comprises one or more meat carriers mounted (attached) to said chain belt(s), wherein it is imaginable that the retention element(s) is/are configured to co-act with said meat carrier(s) to hold the conveyor in position. It is commonly favourable in case the retention element is at least partially hook-shaped and/or substantially L-shaped. In case one or more chain belts would be applied, it is imaginable that at least one chain tensioning mechanism is applied to maintain (and optionally adjust) a desired chain tension. Preferably, at least one drive system, such as a the first drive system, is configured to drive (displace or move) at least one retention element, in particular to displace said at least one retention element between a retaining state, wherein the conveyor is retained in an interrupted state, and a releasing state, wherein movement of the conveyor is allowed. Preferably, at least one retention element is vertically aligned with, in particular positioned below, the cutting section. This position secures that the conveyor section subjected to the cutting action is secured. Moreover, this position allows the drive system to be design as compactly as possible, as the driven components are installed and/or positioned in the vicinity of each other.

Preferably, a first part of at least one retention element is pivotably attached to a fixed frame, wherein a second part of the retention element comprises a follower configured to co-act with a rotatable drive cam, preferably attached to a driven rotation axle of at least one drive system, in particular the first drive system. An end section of the retention element facing away from said first part of the retention element or any other section of the retention element is preferably configured to alternately block and release the conveyor as a result of rotation of the drive cam. Said end section or alternative section configured to co-act with the conveyor may, for example, be a hooked end section. Other movement mechanisms to displace the retention(s) element between a conveyor blocking state and a conveyor releasing state are also imaginable.

Preferably, and as already addressed above, the conveyor comprises a plurality of a meat carriers, wherein each meat carrier is configured to accommodate at least one piece of meat. Each meat carrier may be attached to at least one drive belt of the endless conveyor, preferably an endless belt conveyor. In case a plurality of, typically parallel, belts are applied, each meat carrier may be attached to at least two of said plurality of belts. Preferably, the conveyor comprises a plurality of meat carriers. It may be preferred that different meat carrier are not directly attached to each other and the meat carriers are only attached to the at least one belt of the conveyor. This leads to a modular meat carrier based conveyor, which is often preferred for practical and processing reasons, such as for meat unloading reasons, as well as for maintenance reasons. At least one meat carrier may be configured to support a single piece of meat (to be cut). At least one meat carrier may be configured to simultaneously support a plurality of pieces of meat (to be cut). This leads to an increase of the meat cutting capacity of the device according to the invention. In this latter case, the meat carrier is preferably configured to receive said different pieces of meat in lateral direction, and hence in a side-by-side orientation, which is preferably perpendicular to the transport direction of the conveyor. The meat carrier preferably comprises at least one recess or deepened portion to stably accommodate at least one piece of meat. This recess or deepened portion may have a depth of at least 5 millimetre. The recess of deepened portion preferably has an at least partially concave shape to facilitate unloading of the meat from the meat carrier. Preferably, a support surface of the meat carrier for supporting one or more pieces of meat is a low-friction material. This further facilitates unloading of the meat after cutting. In case the meat carrier is configured to simultaneously accommodate a plurality of pieces of meat, a plurality of separated or mutually connected recesses or deepened portion are applied, wherein said recesses or deepened portions are preferably arranged in a side-by-side orientation. Preferably, at least one recess or deepened portion is inclined with respect to a horizontal level. In a particular preferred embodiment, a front section, in particular an upstream section, of at least one meat carrier is pivotably connected to said at least one endless belt, wherein a back section, in particular a downstream section, of said meat carrier is unconnected to said at least one endless belt. Said back section may and typically will be supported by the at least one belt. This configuration allows front section pivoting of the meat carrier(s) with respect to the belt(s) of the conveyor. Once a belt section, together with an pivotably affixed meat carrier, returns from the upper run to the lower run, the meat carrier will suddenly tilt due to gravitation, wherein the back section will be moved away from the belt(s). This tilting results in an impact on the (cut) meat supported or carried by said meat carrier which will eject the (cut) meat from the meat carrier. The (cut) meat will then e.g. fall into a collecting container and/or will be fall onto a further conveyor for further processing. To this end, it is preferred that the pivotable connection between said front section of said at least one meat carrier and said at least one endless belt is such that an axis of rotation defined by said connection extends in a direction perpendicular to a length of the at least one endless belt. More preferably, the pivotable connection between said front section of said at least one meat carrier and said at least one endless belt is configured to rotate the meat carrier with respect to the endless belt during a transition of the meat carrier from the upper run to the lower run of the endless belt conveyor, wherein the mutual angle of rotation is preferably mechanically limited, more preferably to an angle situated between 30 and 60 degrees, such as 45 degrees. The limitation of the pivoting angle may simply be realized by positioning the axis of rotation at a (limited) distance from a front side of the meat carrier, as a result of which the front side of said meat carrier may act as stop lug to limit the rotation of the meat carrier with respect to the belt(s). Other mechanical solutions to limit the maximum rotation angle are also imaginable. This angle limitation will prevent the meat carrier(s) to over-tilt, which could damage the meat carrier(s) and/or the belt(s), and/or which could hinder a smooth operation of the meat cutting device. Alternatively to or additionally to the pivoting arrangement of the carrier it is conceivable that the carrier comprises at least one meat ejector. The meat ejector is preferably configured for ejecting the meat from the carrier, in particular from the recess or deepened portion of said carrier. It is preferred that the meat ejector is configured to contact at least an upstream or downstream portion of the meat accommodated in the carrier. Preferably, the meat ejector is movably coupled to the carrier. In particular said meat ejector is arranged rotatable with respect to the carrier. The meat ejector is preferably rotatably coupled to the carrier around a rotational axis which is perpendicular to the transport path. The meat ejector may comprise a shaft and one or more ejector elements, preferably wherein said shaft coincides with the rotational axis, and wherein the one or more ejector elements are coupled to the shaft and extend into a part of the carrier, preferably the recess or deepened portion. The ejector element may be arranged in proximity of a cutting slot, particularly adjacent to (both longitudinal sides of) the cutting slot. It is conceivable that the meat ejector is movable between an idle state, wherein the ejector element is accommodated in the meat recess, for maintaining a position of the meat in the meat recess, and an activated state, wherein at least the ejector element is shifted or moved out of the meat recess. Preferably, the meat ejector, in particular the ejector element, is activated by a cam on or adjacent to the transport path. Said cam is preferably positioned near a return from the upper stretch to the lower stretch. Said cam is configured to trigger a cam follower which is coupled to the meat ejector. Said cam causes a movement of the cam follower of the meat ejector which causes a rotation of the meat ejector from the idle state to the activated state for removing of pieces of meat accommodated in the recess. Said meat ejector may be resiliently rotatably coupled to the carrier, such that the meat ejector is automatically urged towards an idle position. The meat ejector can be advantageous for easier and/or more reliable removal of piece(s) of meat from the meat carrier.

Preferably, the meat carrier, once positioned on the upper run of the conveyor, extends in a direction which is parallel to the upper run section of the belt(s), wherein this direction is preferably horizontal. This means that the meat carrier may be positioned flat onto and level with the upper run section of the belts. Such an orientation not only facilitates a stable support of the meat onto the meat carriers, but may also facilitate a balanced and smooth cutting process, as the movement of the cutting element(s) may be perpendicular to a plane defined by the meat carrier.

At least one meat carrier preferably comprises a cutting slot, for allowing at least one movable cutting element to pass through and/or to be at least partially be accommodated in, at least during cutting, said cutting slot, wherein the length of the cutting slot is preferably larger, more preferably at least 1.1 times larger, than the length of the cutting element. The width of the cutting slot is preferably larger, such as at least 1.5 times larger, than the width of (a blade section of) the cutting element. Once the meat carrier is aligned with the meat cutting section, in particular the cutting element(s), wherein the meat carrier is preferably positioned below the cutting element(s), in the non-operational state of the cutting element(s), the conveyor will be stopped and simultaneously and/or successively the cutting elements will be moved towards the meat carrier to cut the meat. In the extreme (lower) position of the cutting element(s), at least a part of each cutting element will preferably be positioned within the meat carrier, preferably within the cutting slot. The cutting slot and the cutting element are preferably mutually aligned and run in parallel. At least a part of the cutting slot may be positioned at or in a bottom surface of the recess or deepened portion of the meat carrier. The cutting slot may form a through-opening, which facilitates cutting and subsequent cleaning of the meat carrier.

In a preferred embodiment, the device and/or conveyor comprises at least one, preferably static, ejector for ejecting of cut pieces of meat downstream of the cutting section. As already indicated above, the cut meat may be ejected (unloaded) from the meat carrier by pivoting the meat carrier with respect to the endless belt(s) of the conveyor when moving from the upper run to the lower run of the conveyor. Additionally or alternatively, said, preferably static, ejector, such as at least scrape element, e.g. at least one scrape arm, may be used to remove the cut meat from the meat carrier(s). Each scrape element may be configured to co-act with one piece of (cut) meat or may be configured to co-act simultaneously with a plurality of pieces of (cut) meat carried by the same meat carrier.

Preferably, the first drive system and/or the second drive system comprise a single drive motor, preferably an electric drive motor. As indicated above, the first drive system and second drive system may be at least partially or entirely the same drive system. This allows the application of a single drive motor, which typically also facilitates synchronisation of the intermittent conveyor movement and the cutting element(s) movement. The drive motor may be configured to (continuously) operate at constant speed. However, it is also imaginable that the drive motor is configured to operate at a variable speed, preferably an oscillating speed. To this end, it is imaginable that said motor comprises at least two, preferably three, different drive speeds during each drive period of the drive system. This allows the stopping action and the (re)starting action of the conveyor to be performed in a more gradual and smooth manner, which decreases the noise production during operation. Moreover, this leads to less mechanical impact, and hence less wear, which makes the drive system and the conveyor and therefore the device as such more durable. Preferably, a driving speed of the drive motor is reduced prior to an intermittent motion is provided to the conveyor. Preferably, after the conveyor has been positioned in a subsequent position, the driving speed of the drive motor increases. As such, the driving speed of the motor is larger during a cutting action of the cutting section.

In a preferred embodiment, the first drive system comprises at least one driven rotation axle, and at least one drive cam attached to said driven rotation axle for at least driving one or more movable components of the device, wherein at least one primary drive cam, preferably a plurality of laterally oriented primary drive cams, is/are configured to intermittently drive the conveyor. Preferably, said driven rotation axle is, directly or indirectly, connected to a drive motor, preferably an electric drive motor. The driven rotation axle is preferably a linear (straight) axle, and may also be referred to as shaft. Preferably, a plurality of drive cams is fixedly mounted onto the driven rotation axle. This makes the drive cams rotatable. A drive cam is an element, such as a wheel-like element, which has, for example, an irregular circumferential edge and/or at least one designed lateral slot to impart motion to a follower during rotation of the drive cam. The shape of the drive cam, in particular the circumferential edge and/or the lateral slot determines the specific motion that will be transmitted to the follower. The follower will make part and/or will be connected and/or will co-act, either directly or indirectly, with a further component to be driven, such as the conveyor(s) and/or the cutting element(s).

Preferably, at least one primary drive cam is provided with a circumferential edge which comprises a toothed section having at least one drive tooth for moving the conveyor, and which further comprises an untoothed section for interrupting the movement of the conveyor. In this embodiment, the primary drive cam preferably acts a partial gearwheel, wherein the geared part (toothed part) of the drive cam is configured to move the conveyor, and wherein the untoothed part is not configured to move the conveyor. Preferably, the base shape of the primary drive cam is wheel shaped or cylindrical shape, wherein this base shape has a circular cross-section. The toothed section will protrude with respect to this base shape. When the primary drive cam is rotated and completes one revolution, the conveyor will partially be driven and partially be undriven, leading to an intermittent movement of the conveyor. In the undriven state of the conveyor, the conveyor will normally practically directly stop moving due to frictional forces which play a role and which prevent the conveyor from freely further moving.

Preferably, said at least one primary drive cam is centrally attached to the driven axle. This means that a centre of the primary drive cam coincides with a longitudinal axis of the driven axle. In case the primary drive cam could be considered as at least a part of a wheel or as at least a part of a cylinder and/or as at least a part of another kind of prism shape, the location of centre will typically be well-defined and well known.

Preferably, at least one drive cam, such as at least one primary drive cam, is configured to move at least one retention element for retaining the conveyor, in particular in an interrupted state, between a retaining state and a releasing state. To this end, said at least one drive cam configured to move at least one retention element preferably comprises, preferably at at least one face, at least one non-circular continuous guiding slot or guiding edge acting as cam profile configured to co-act with at least one follower of at least one retention element, wherein the guiding slot or guiding edge preferably has a non-circular shape chosen from the group consisting of: a pear shape, a heart shape, a drop shape, a star shape, and an indented circular shape. In case the primary drive cam would be used for this purpose, the primary drive cam would be assigned a double functionality; the toothed section is configured to drive the conveyor, while the guiding slot or guiding edge is configured to drive the retention element(s).

It may be preferred that at least one secondary drive cam, preferably a plurality of laterally oriented secondary drive cams, is/are attached to said driven axle for driving of at least a part of the cutting section. The secondary drive cam(s) may be formed by and/or integrated with the primary drive cam(s). It is also imaginable that the one or more secondary drive cams is/are separate drive cam(s), which may facilitate the design and positioning of the drive cams. Preferably, said at least one secondary drive cam is either eccentrically mounted to the driven axle and/or is provided with a non-circular circumferential guiding slot and/or a non-circular, preferably continuous (annular-like), guiding edge. Preferably, a part of, in particular a circumferential guiding edge and/or a guiding slot of, the at least one secondary drive cam is configured to act as cam profile and to co-act with at least one follower of the cutting section to displace at least a part of said cutting section, and preferably to move the cutting element(s) between the cutting position (operational state) and the non-cutting position (non-operational state). Preferably, at least one secondary drive cam comprises at least one cam profile, wherein the cutting section comprises at least one follower configured to co-act with said at least one cam profile, and wherein the cutting section preferably comprises at least one spring, in particular at least one compression spring, to maintain contact between the follower and the cam profile. This secures a proper movement of the cutting element(s).

The device according to the invention preferably comprises at least two second drive cams and at least one, preferably at least two primary drive cams, all mounted to the driven rotation axle, wherein said at least two primary drive cams are preferably located in between at least two secondary drive cams. Preferably at least two, more preferably all drive cams, are positioned at a distance from each other, and hence are preferably spaced apart.

The cutting section preferably comprises a displaceable support frame, wherein at least one cutting element is attached to the support frame, and wherein the support frame is movable in a direction having at least a directional component perpendicular to the transport path. Typically and preferably, the support frame is held in place by a stationary support structure. Preferably, at least one cutting element, more preferably each cutting element, is releasably mounted to the support frame, in particular via a bayonet mount (bayonet connection). This allows the cutting elements to be easily replaced from time to time. The movable support frame of the cutting section is preferably guided by one or more guide rollers, for guiding of the cutting section, in particular the support frame, in at least one direction, preferably a direction perpendicular to the transport path. This would lead to a linear movement, preferably a vertical movement, of the support frame and the cutting element(s) attached thereto. The guide rollers may be mounted onto the stationary support structure. The guide rollers are preferably non-driven guide rollers. The displaceable support frame preferably comprises at least one follower configured to co-act with at least one second drive cam to realize the oscillating up- and-down movement of the support frame and the cutting element(s) attached thereto. Optionally, the device according to the present invention comprises at least one sensor, such as a position or proximity sensor. Said sensor may be arranged for determining a presence of a part of the support frame of the cutting section. This may allow a control unit, if applied, to determine a position of the drive system. The sensor may be used, for example, to determine an initial position of the movement period of the drive system. In particular, said sensor may be user for resetting the period, i.e., to restart a new period. Preferably, a single period of the dive system amounts to approximately 360 degrees. If the sensor signal does not match, i.e., based on a control unit computation, the periodic movement of the drive system, the device, in particular the drive system may be arranged in an emergency drive, preferably at lower speed. Preferably, said sensor is configured for detecting the position, i.e., operational or non-operational, of the cutting section.

Preferably, the cutting section comprises a plurality of cutting elements, wherein said cutting elements are more preferably laterally arranged in a width direction of the endless conveyor and are preferably mutually spaced apart. The application of a plurality of cutting elements allows simultaneous cutting of multiple pieces of meat. This preferred side-by-side orientation of the cutting elements keeps the cutting section relatively compact and normally simplifies the design of both the cutting section and the conveyor (with its meat carriers), as well as the mutual alignment of the cutting elements with respect to the meat carriers. At least one cutting element is preferably formed by and/or comprises a cutting blade, wherein said cutting blade is straight (linear) or is at least partially triangularly and/or trapezium shaped. Preferably the cutting blade is unserrated (although serrated cutting blades are imaginable), to facilitate pressing the blade in a linear movement through the meat to be cut. The cutting blade is preferably facing the transport path, both in the operational state (cutting position) and the non-operational state (uncutting position).

It is imaginable and may be preferred that the device comprises at least one meat stabilizing structure and./or at least one meat stabilizing element for stabilizing of pieces of meat accommodated in a meat carrier once the meat carrier is positioned in the vicinity and/or is aligned with the cutting section. This prevents accidental removal of the meat from the meat carrier during the cutting process. Preferably, the meat stabilizing structure is arranged at a predetermined distance with respect to the endless conveyor. Typically, the meat stabilizing structure is positioned in between the conveyor and the cutting elements in the non-operational state. Hence preferably, the stabilizing structure comprises one or more cutting recesses or slots, for passing through of one or more cutting elements.

It may be preferred that the device comprises at least one cooling section for cooling the meat cut and/or to be cut, wherein said cooling section is preferably configured to cool, directly or indirectly, the endless conveyor, and wherein said cooling section is preferably configured to cool the meat and/or the conveyor to a temperature of 8 degrees Celsius or lower, such as 6 degrees Celsius or lower or such as 4 degrees Celsius or lower. This active cooling of the meat during the cutting process will be in favour of the meat preservation and food safety.

The invention also relates to a first intermittent-motion drive system for use in a device for processing pieces of meat, in particular a device according to the invention.

The invention further relates to a method for cutting pieces of meat, preferably pieces of poultry, in particular poultry mid-wings, into separate portions, preferably by using the device according to the invention, comprising the steps of:
a) positioning or loading one or more pieces of meat to be cut, directly or indirectly, onto an endless conveyor of a meat cutting device,
b) intermittently driving the endless conveyor by using an intermittent-motion drive system such that said one or more pieces of meat are displaced in a transport direction, wherein the movement of the endless conveyor is alternately moved and interrupted by said drive system,
c) cutting, in an interrupted state of the conveyor, at least one piece of meat into separate pieces, by mechanically moving, preferably automatedly moving, at least one cutting element of a cutting section of said meat cutting device towards and into said at least one piece of meat aligned with said at least one cutting element, followed by a movement of the at least one cutting element away from the cut meat and the conveyor,
d) removing, preferably automatedly removing, the cut meat from the endless conveyor downstream of the cutting section,
e) periodically repeating at least steps a)-d).

Preferably, the intermittent-motion drive system causes movement of (and drives) the at least cutting element according to step c). Said intermittent drive system preferably comprises a single drive motor which preferably continuously operates during steps b)-c), preferably during steps b)-d), more preferably during steps a)-d). Preferably, the method further comprises the step of b1) reducing, preferably gradually reducing, a driving speed of the drive system prior to step c). Preferably, after step c) the driving speed of the drive system is increased, preferably gradually increased. As indicated above, adjusting the speed of the drive system and adapting the speed of the drive system to the cutting process, the noise production can be minimized, and consequently the wear of components of the device can be reduced, which is in favour of the lifetime of the device. The speed can be adjusted in a continuous manner or in a step-like (discrete) manner.

Preferred embodiments of the invention are illustrated by means of the non-limitative set of clauses presented below.

### Clauses

1. Device for cutting pieces of meat, preferably pieces of poultry, in particular poultry mid-wings, into separate portions, comprising:
   - at least one endless conveyor for transporting pieces of meat, preferably pieces of poultry, in particular poultry mid-wings, along a transport path,
   - at least one cutting section arranged along the along the transport path of the endless conveyor, said cutting section comprising at least one movable cutting element for cutting pieces of meat transported along the transport path into separate portions, wherein at least one cutting element is at least movable in a direction having at least a directional component perpendicular to the transport path,
   - at least one first intermittent-motion drive system for intermittently driving the endless conveyor.
2. Device according to clause 1, wherein the at least one movable cutting element is displaceable between an operational state, wherein the cutting element is configured to intersect the transport path and/or a part of the conveyor to cut meat into separate portions, and an non-operational state, wherein the cutting element is positioned at a distance from the transport path and/or a part of the conveyor.
3. Device according to clause 2, wherein the device comprises at least one second drive system for, preferably continuously or intermittently, moving the at least one cutting element between the operational state and the non-operational state.
4. Device according to clause 3, wherein the first drive system and the second drive system are configured to mutually synchronize the movement of the at least one cutting element and the intermittent movement of the endless conveyor.
5. Device according to clause 4, wherein the first intermittent-motion drive system is configured to periodically, temporarily interrupt movement of the endless conveyor, and wherein the second drive system is configured to position the at least one cutting element into the operational state when the endless conveyor is in an interrupted state, and to position the at least one cutting element into the non-operational state if the endless conveyor is not in an interrupted state.
6. Device according to any of the preceding clauses, wherein the first drive system and the second drive system are configured to mutually cooperate with each other and/or wherein the first drive system and the second drive system are at least partially integrated, and wherein the device optionally comprises at least one control unit to synchronize the first drive system and the second drive system.
7. Device according to any of the clauses 3-6, wherein the first drive system and the second drive system are the same drive system.
8. Device according to any of the preceding clauses, wherein the transport path of the pieces of meat extends over at least a part of an upper side of the endless conveyor.
9. Device according to any of the preceding clauses, wherein said endless conveyor is an endless belt conveyor.
10. Device according to any of the preceding clauses, wherein said endless conveyor comprises at least one endless belt, such as a chain, preferably at least two endless belts, such as at least two chains, oriented in parallel and preferably spaced apart.
11. Device according to clause 10, wherein said endless belt conveyor comprises an upper run and a lower run, wherein intermediate space is defined between the upper run and the lower run, and wherein at least a part of said upper run defines the transport path of the pieces of meat.
12. Device according to clause 11, wherein said belt conveyor comprises at least one belt return device facilitating transitioning of the endless belt between the lower run and the upper run.
13. Device according to clause 12, wherein said belt return device comprises at least one guide sprocket, preferably at least one non-driven guide sprocket.
14. Device according to any of clauses 11-13, wherein at least a part of said at least one first intermittent-motion drive system is positioned within said intermediate space.
15. Device according to any of clauses 11-14, wherein at least a part of said at least one first intermittent-motion drive system is configured to co-act with, in particular to intermittently drive, a lower side of said upper run of the endless belt conveyor.
16. Device according to any of the preceding clauses, wherein the device further comprises at least one retention element, preferably a driven retention element, for retaining the conveyor in an interrupted state.
17. Device according to any of clauses 11-16, wherein at least a part of said at least one retention element is positioned within said intermediate space.
18. Device according to clause 17, wherein at least one retention element is configured to co-act with a lower side of the upper run of the conveyor and/or wherein at least a part of at least one retention element is configured to be accommodated in one or more opening formed in the endless belt.
19. Device according to any of clauses 16-18, wherein the at least one first drive system is configured to drive at least one retention element, in particular to displace said at least one retention element between a retaining state, wherein the conveyor is retained in an interrupted state, and a releasing state, wherein movement of the conveyor is allowed.
20. Device according to any of the clauses 16-19, wherein at least one retention element is vertically aligned with, in particular positioned below, the cutting section.
21. Device according to any of the clauses 16-20, wherein a first part of at least one retention element is pivotably attached to a fixed frame, and wherein a second part of the retention element is rotatably movable around said rotatable attachment.
22. Device according to any of the preceding clauses, wherein the conveyor comprises a plurality of a meat carriers, wherein each meat carrier is configured to accommodate at least one piece of meat.
23. Device according to clause 22, wherein the conveyor comprises an endless belt, wherein the meat carriers are affixed to at least one endless belt of the conveyor.
24. Device according to clause any of clauses 11-21 and any of clauses 22-23, wherein a front section, in particular an upstream section, of at least one meat carrier is pivotably connected to said at least one endless belt, and wherein a back section, in particular a downstream section, of said meat carrier is unconnected to said at least one endless belt.
25. Device according to clause 24, wherein the pivotable connection between said front section of said at least one meat carrier and said at least one endless belt is such that an axis of rotation defined by said connection extends in a direction perpendicular to a length of the at least one endless belt.
26. Device according to clause 25, wherein the pivotable connection between said front section of said at least one meat carrier and said at least one endless belt is configured to rotate the meat carrier with respect to the endless belt during a transition of the meat carrier from the upper run to the lower run of the endless belt conveyor, wherein the mutual angle of rotation is preferably mechanically limited, more preferably to 45 degrees.
27. Device according to any of clauses 22-26, wherein at least one meat carrier comprises a cutting slot, for allowing at least one movable cutting element to pass through and/or to be at least partially be accommodated in, at least during cutting, said cutting slot, wherein the length of the cutting slot is preferably larger than the length of the cutting element
28. Device according to any of clauses 22-27, wherein at least one meat carrier comprises at least one accommodating space, preferably wherein said meat-carrier comprises a plurality of laterally oriented accommodating spaces, wherein each accommodating space is configured to accommodate at least one piece of meat, in particular a poultry mid-wing.
29. Device according to any of the preceding clauses, wherein the device and/or conveyor comprises at least one, preferably static, ejector for ejecting of cut pieces of meat downstream of the cutting section.
30. Device according to any of the preceding clauses, wherein the first drive system and/or the second drive system comprise a single drive motor, preferably an electric drive motor.
31. Device according to any of the preceding clauses, wherein the first drive system comprises at least one driven rotation axle, and at least one drive cam attached to said driven rotation axle for at least driving one or more movable components of the device, wherein at least one primary drive cam, preferably a plurality of laterally oriented primary drive cams, is/are configured to intermittently drive the conveyor.
32. Device according to clause 31, wherein at least one primary drive cam is provided with a circumferential edge which comprises a toothed section having at least one drive tooth for moving the conveyor, and which further comprises an untoothed section for interrupting the movement of the conveyor.
33. Device according to clause 31 or 32, wherein the at least one primary drive cam is centrally attached to the driven axle.
34. Device according to any of clauses 31-33, wherein at least one drive cam, such as at least one primary drive cam, is configured to move at least one retention element for retaining the conveyor, in particular in an interrupted state, between a retaining state and a releasing state.
35. Device according to clause 34, wherein said at least one drive cam configured to move at least one retention element comprises at at least one face at least one non-circular continuous guiding slot acting as cam profile configured to co-act with at least one follower of at least one retention element, wherein the guiding slot preferably has a non-circular shape chosen from the group consisting of: a pear shape, a heart shape, a drop shape, a star shape, and an indented circular shape.
36. Device according to any of clauses 31-35, wherein at least one secondary drive cam, preferably a plurality of laterally oriented secondary drive cams, is/are attached to said driven axle for driving of at least a part of the cutting section.
37. Device according to clause 36, wherein the at least one secondary drive cam is either eccentrically mounted to the driven axle and/or is provided with a non-circular circumferential edge.
38. Device according to clause 36 or 37, wherein a part of, in particular a circumferential edge of, the at least one secondary drive cam is configured to act as cam profile and to co-act with at least one follower of the cutting section to displace at least a part of said cutting section.
39. Device according to any of clauses 36-38, wherein at least one secondary drive cam comprises at least one cam profile, wherein the cutting section comprises at least one follower configured to co-act with said at least one cam profile, and wherein the cutting section preferably comprises at least one spring, in particular at least one compression spring, to maintain contact between the follower and the cam profile.
40. Device according to any of clauses 36-39, wherein said at least one secondary drive cam comprises at at least one face at least one, preferably non-circular, continuous guiding slot acting as cam profile configured to co-act with at least one follower of the cutting section.
41. Device according to any of clauses 36-40, wherein the device comprises at least two second drive cams and at least two primary drive cams, all mounted to the driven rotation axle, wherein said at least two primary drive cams are preferably located in between at least two secondary drive cams.
42. Device according to any of the clauses 31-41, wherein all drive cams are mutually spaced apart.
43. Device according to any of the preceding clauses, wherein the cutting section comprises a support frame, wherein at least one cutting element is attached to the support frame, and wherein the support frame is movable in a direction having at least a directional component perpendicular to the transport path.
44. Device according to clause 43, wherein at least one cutting element is releasably mounted to the support frame, in particular via a bayonet mount.
45. Device according to clause 43 or 44, wherein said support frame is guided by one or more guide rollers, for guiding of the cutting section, in particular the support frame, in at least one direction, preferably a direction perpendicular to the transport path.
46. Device according to any of the preceding clauses, wherein the cutting section comprises a plurality of cutting elements, wherein said cutting elements are laterally arranged in a width direction of the endless conveyor and preferably mutually spaced apart.
47. Device according to any of the preceding clauses, wherein at least one cutting element is formed by a cutting blade, wherein said cutting blade is at least partially triangularly and/or trapezium shaped, preferably facing the transport path.
48. Device according to any of the preceding clauses, wherein at least one of the cutting section comprises a stabilizing structure for stabilizing of pieces of meat accommodated in a meat carrier, preferably wherein said stabilizing structure at least partially overlaps with at least one cutting section.
49. Device according to clause 48, wherein the stabilizing structure is arranged at a predetermined distance with respect to the endless conveyor.
50. Device according to any of clauses 48-49, wherein the stabilizing structure comprises one or more cutting recesses, for passing through of one or more cutting elements.
51. Device according to any of the preceding clauses, wherein the device comprises at least one cooling section for cooling the meat cut and/or to be cut, wherein said cooling section is preferably configured to cool, directly or indirectly, the endless conveyor, and wherein said cooling section is preferably configured to cool the meat and/or the conveyor to a temperature of 8 degrees Celsius or lower.
52. Device according to any of the preceding clauses, wherein a motor for driving of the intermittent-motion drive system is continuously driven by a single motor, wherein said motor comprises at least two, preferably three, different drive speeds during each drive period of the drive system.
53. First intermittent-motion drive system for use in a device for processing pieces of meat, in particular a device according to any of the preceding clauses.
54. Method for cutting pieces of meat, preferably pieces of poultry, in particular poultry mid-wings, into separate portions, preferably by using the device according to any of the clauses 1-52, comprising the steps of:
   a) positioning or loading one or more pieces of meat to be cut, directly or indirectly, onto an endless conveyor of a meat cutting device,
   b) intermittently driving the endless conveyor by using an intermittent-motion drive system such that said one or more pieces of meat are displaced in a transport direction, wherein the movement of the endless conveyor is alternately moved and interrupted by said drive system,
   c) cutting, in an interrupted state of the conveyor, at least one piece of meat into separate pieces, by mechanically moving, preferably automatedly moving, at least one cutting element of a cutting section of said meat cutting device towards and into said at least one piece of meat aligned with said at least one cutting element, followed by a movement of the at least one cutting element away from the cut meat and the conveyor,
   d) removing, preferably automatedly removing, the cut meat from the endless conveyor downstream of the cutting section,
   e) periodically repeating at least steps a)-d).
55. Method according to clause 54, wherein the conveyor is brought into motion again after step c).
56. Method according to clause 54 or 55, wherein the intermittent-motion drive system causes movement of the at least cutting element according to step c).
57. Method according to clause 56, wherein said intermittent drive system comprises a single drive motor which preferably continuously operates during steps b)-d), preferably during steps a)-d).
58. Method according to any of the clauses 54-57, further comprising the step of b1) reducing, preferably gradually reducing, a driving speed of the drive system prior to step c).
59. Method according to any of the clauses 54-58, wherein during step f) the driving speed of the drive system is increased, preferably gradually increased.

The present invention will hereinafter be further elucidated based on the following non-limitative figures, wherein:
- Figure 1 shows a perspective view of a non-limitative embodiment of the device;
- Figure 2 shows a detailed view of a part of the device shown in figure 1;
- Figure 3 shows a non-limitative embodiment of an intermittent-motion drive system according to the invention;
- Figure 4 shows a perspective view of the cutting section in a first state;
- Figure 5 shows a perspective view of the same cutting section as shown in figure 4, but in a second state;
- Figure 6 shows a part of the drive system in a first state;
- Figure 7 shows the same part of the drive system as shown in figure 6, but in a second state; and
- Figure 8 depicts a detail of the drive mechanism according to an embodiment of the present invention; and
- Figures 9a, 9b, 9c show an embodiment of a meat carrier comprising a meat ejector.

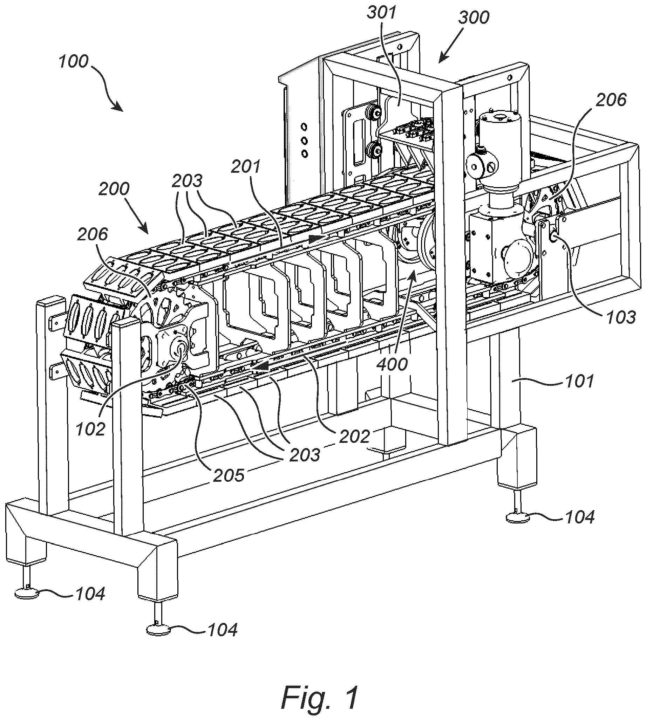

Figure 1 shows a perspective view of the device 100 according to an embodiment of the present invention. The device 100 allows for efficiently cutting pieces of meat, preferably poultry, such as in particular poultry mid-wings, into separate portions. The device 100 comprises an endless conveyor 200 for transporting pieces of meat along a transport path. A cutting section 300 is arranged along said transport path, and in this embodiment comprises a movable frame 301 with a plurality of movable cutting elements. Said cutting elements being movable from and towards, in particular perpendicular, the conveyor 200. Said conveyor 200 comprises an upper run 201 and a lower run 202, wherein the upper run 201 may define a part of the transport path of the pieces of meat. A pair of endless belts 205, in particular chains 205 as depicted in this embodiments, are arranged along a pair of guide sprockets 206 such as to connect the upper run 201 and lower run 202. Attached to said endless belt 205 are a plurality of meat carriers 203. Said meat carriers are configured for carrying one or more pieces of meat, in particular poultry mid-wings. The guide sprockets 206 are rotatably arranged at a rotational axis 102, 103. Said sprockets 206 are non-driven sprockets 206 and serve to guide the chain from upper to lower 201, 202 and vice versa. Between the upper run 201 and lower run 202 of the conveyor 200 there is an intermediate space. Within said intermediate space, a drive system 400, in particular an intermittent-motion drive system 400 is provide. Said drive system 400 is configured for intermittently driving the conveyor and in this embodiment also the cutting section. This makes it convenient as the single drive system 400 is configured for driving both the conveyor and the cutting section allowing good timing between the different actions, which may be a difficult aspect in intermittent drive systems. The drive system 400 is in particular configured for displacing, periodically, the meat-carriers 203 one position at a time. Hence, displacing the meat carriers over the transport path into the cutting section 300. The entire device 100 may be supported by a fixed frame 101, which is arranged, in this non-limitative embodiment, on four stands 104, which may be adjustable in height for levelling of the device 100. Preferably, the device is placed in an environment and/or comprises a temperature control, for maintaining a preferred temperature for processing of the pieces of meat, wherein said temperature is preferably below 8 degrees Celsius.

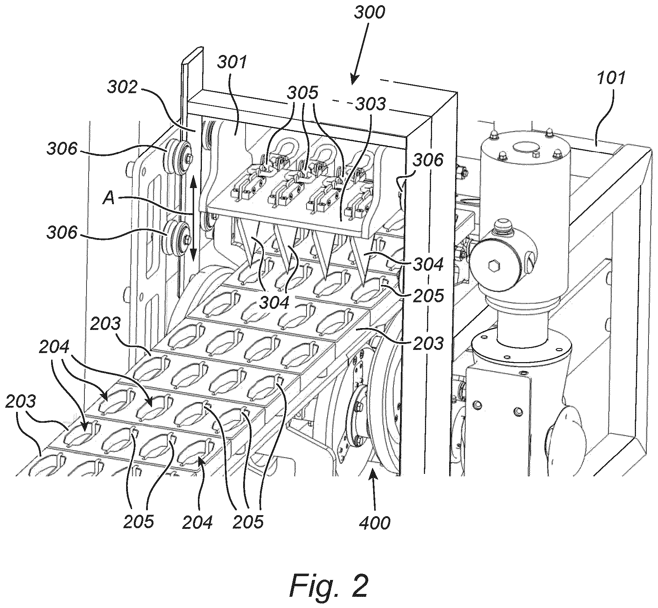

Figure 2 provides a detailed view of the cutting section 300 as shown in figure 1. The cutting section comprises a plurality of movable cutting elements 304. Said cutting elements 304 being movable in a direction having at least a directional component perpendicular to the transport path, in this embodiment substantially perpendicular to the meat carriers 203. This may allow for efficient cutting action by the device. In order to provide for easy maintenance, the cutting elements 304, which are formed here by knifes with a substantially triangular frontal end, can be replaced easily. In this embodiment, said cutting elements 304 are attached to a carrying part 303 of the support frame 301, 302, 303, by means of bayonet mounts 305. This allows for easy replacement in case a cutting element 304 is damaged. Requiring very little down-time of the device. A part of the support frame 301, 302, 303, in particular a vertically oriented part 302, is movable in a direction having at least a directional component A perpendicular to the transport path. In the shown embodiment, the support frame part 302 is vertically oriented, and vertically (i.e., perpendicular to the horizontal transport path) movable. By moving of the support frame 301, 302, 303, the cutting elements 304 mounted thereto are being provided with movement. In order to prevent undesired movement of the support frame 301, 302, 303, said vertically oriented part 302 is guided by one or more guide rollers 306. Said guide rollers 306 are preferably non-driven guide rollers 306, for guiding the support frame in at least one direction, in this case the vertical direction A. It is preferred that the support frame 301, 302, 303 is moved by a part of the intermittent drive system 400 according to the invention. This figure further shows more detail of the conveyor, in particular the meat carriers 203. In this embodiment, each meat carrier 203 comprises a plurality, in particular four parallel, of accommodating spaces 204, for accommodating of a piece of meat, in particular a poultry mid-wing. Said poultry midwing, in the embodiment depicted, may be oriented substantially parallel to the transport direction when accommodated in an accommodating space 204. Said meat carriers 203 are preferably affixed to the belt of the endless conveyor. Although not shown in this figure, it may be conceivable that a front section of at least one meat carrier 203 is pivotably connected to said at least one endless belt, and wherein a back section of said meat carrier 203 is unconnected to said at least one endless belt. This may allow rotation of the meat carrier 203 with respect to the conveyor which may help to eject the piece of meat in the accommodating space 204. The meat carriers further comprise at least one cutting slot 205, for allowing at least one movable cutting element 304 to pass through and/or to be at least partially be accommodated in, at least during cutting, said cutting recess 205. In the figure shown here, the cutting section 300 is positioned in an non-operational state, wherein the cutting elements 304 are not intersecting the transport path and hence do not make a cutting action. However, as can be seen, a meat carrier 203 is aligned with the cutting elements 304, and wherein in particular the cutting slots 205 of said carrier 203 are aligned with the cutting elements 304 such that when the cutting section 300 moves into an operational state, the cutting element 304 may extend into the cutting slot 205 such that a piece of meat accommodated in the accommodating space 204 can be split into separate pieces.

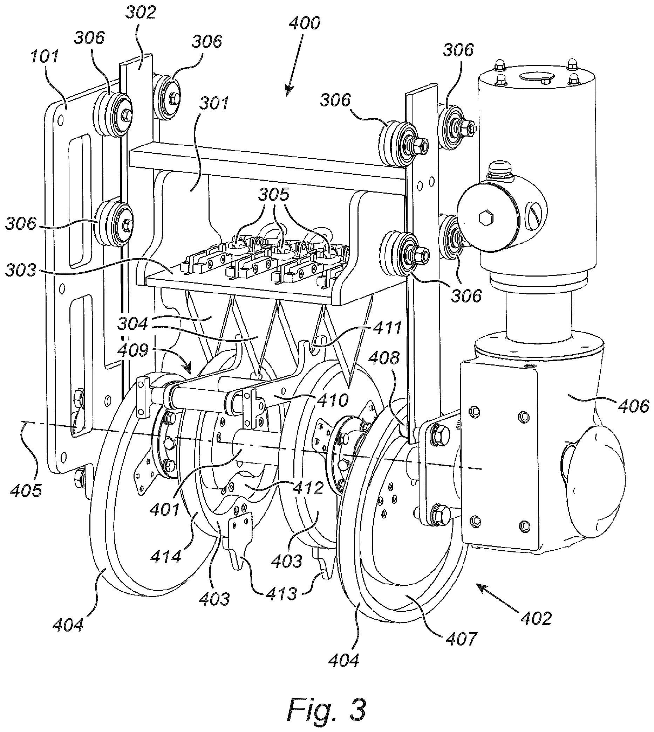

Figure 3 shows an embodiment of an intermittent-motion drive system 400 according to the present invention. Particularly, the embodiment depicted may be used for driving one or more components, in particular a cutting section and conveyor of a device according to the invention. The drive system 400 comprises a plurality of drive cams 402, which drive cams 402 are attached to a driven rotation axle 401, such that the drive cams 402 can be rotated around an axis of rotation 405. The drive system 400 shown in this embodiment comprises a pair of primary drive cams 403 which are configured for intermittently driving the conveyor. The pair of primary drive cams 403 are arranged mutually spaced apart on the driven axle 401, and placed such as to co-act with a part of an endless belt, in particular a chain. The primary drive cams 403 each comprise a toothed section 413 and a untoothed section 414, which is free of teeth. The primary drive cams 403 shown in this embodiment in particular are provided only with a single tooth 413. Said tooth is configured to co-act with a part of the conveyor. Hence, the toothed section 413 is configured to move the conveyor, whereas the untoothed section 414 is configured for interrupting the movement of the conveyor. Although this embodiment of the drive system 400 shows a single drive tooth 413, it is conceivable that a different number if tooth 413 may be provided. The primary drive cams 403 are centrally attached to the driven axle 401 and are substantially circular. The primary drive cams 403 are also configured for moving a retention element 409 for retaining the conveyor and/or meat carrier, in particular in an interrupted state. The retention element 409 may be moved by the primary cam 403 between a retaining state and a releasing state. The retention element 409 comprises a lever 409 which is pivotally attached to a fixed frame of the device, and a contact element 411 for contacting a part of the conveyor or meat carrier in a retaining state. The embodiment depicted in this figure shows the retaining state of the retaining element 409. To this end, said primary drive cam comprises at at least one face at least one non-circular continuous guiding slot 412 acting as cam profile 412 configured to co-act with at least one follower of at least one retention element 409. The cam follower may be formed by a circular roller attached rotatably to the retention element 409. The guiding slot 412 preferably has a non-circular shape chosen from the group consisting of: a pear shape, a heart shape, a drop shape, a star shape, and an indented circular shape. The drive system 400 further comprises, at least in this embodiment, a pair of secondary drive cams 404. Said secondary drive cams 404 are laterally oriented and are attached to the driven axle 401 for driving a part of the cutting section 300, in particular a support frame 301, 302, 303 of the cutting section 300. The secondary drive cams are eccentrically mounted to the driven axle 401 and/or are provided with a non-circular circumferential edge. The secondary cams 404, in particular at at least one face, are provided with a guiding slot 407 acting as a cam profile 407 configured to co-act with at least one follower 408 of the cutting section 300. Hence, a part of, in particular a circumferential edge of, the at least one secondary drive cam 404 is configured to act as cam profile 407 and to co-act with at least one follower 408 of the cutting section 300 to displace at least a part of said cutting section 300, in particular the support frame 301, 302, 303 thereof. All of the primary cams 403 and secondary cams 404 are mounted to the driven rotation axle 401, wherein said at least two primary drive cams 403 are preferably located in between at least two secondary drive cams 404. Said rotation axle 401 is preferably driven by only a single motor 406, in particular an electric drive motor 406. As such, both the conveyor (i.e., by the primary cams 403) and the cutting section (i.e., by the secondary cams 404) as well as the retention element (i.e., by the primary cams 403) are moved by means of only a single motor 406. In the figure depicted, the cutting section 300 is positioned in the operational state, hence during a cutting of a piece of meat. It can be seen that the cutting elements 304 partially intersect the transport path.

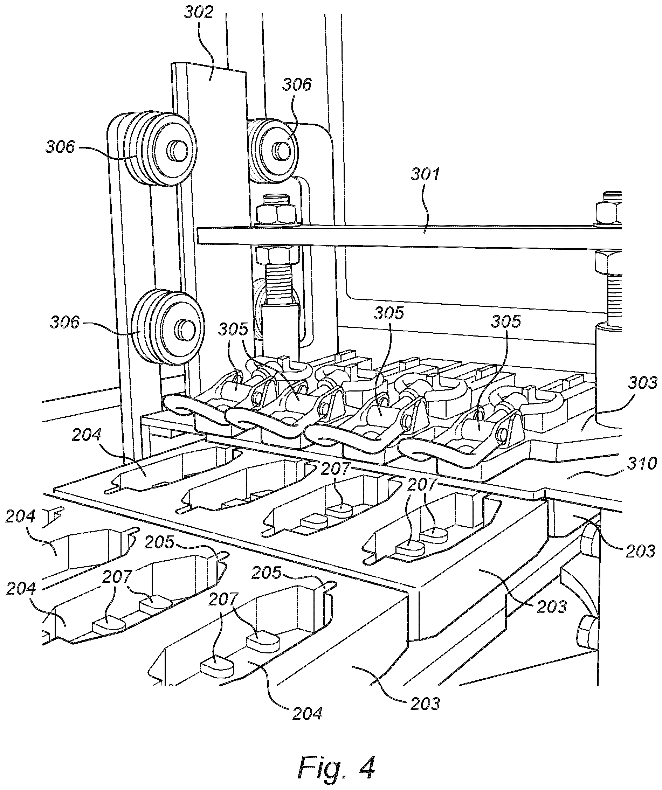

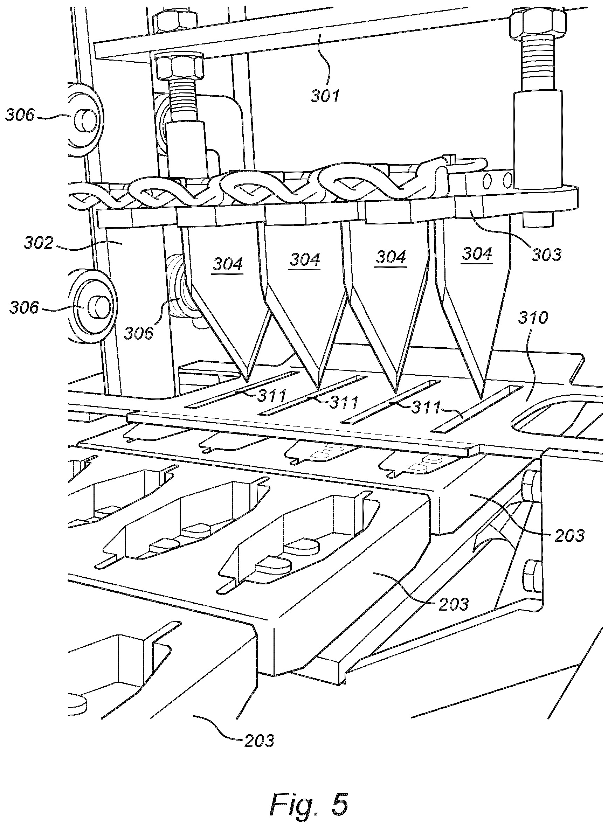

Figure 4 shows a perspective view of the cutting section 300 in a first state, the operational state. Here, the cutting section 300, in particular the support frame 301, 302, 303, is positioned in a lowered position such that the cutting elements intersect the transport path. The detailed view shows the bayonet mounts 305 for attaching the cutting elements to the support frame 301, 302, 303 in a releasable manner. In addition, this figure shows some details of the meat carriers 203. Two meat-carriers 203 are clearly depicted in a location upstream of the cutting section 300. Each of the meat carriers 203 comprises four laterally separated accommodating spaces 204. Wherein, in each of the accommodating spaces 204 a cutting slot 205. In addition, the accommodating spaces 204 are provided with one or more protrusions 207. Said protrusions reduce a contact surface between the accommodating space 204 and the piece of meat. This prevents pieces of meat from remaining stuck to the accommodating spaces 204 after cutting. In proximity of the accommodating spaces a stabilizing structure 310 for stabilizing pieces of meat accommodated in a meat carrier is arranged. Said stabilizing structure 310 at least partially overlaps with at least one cutting section 300 and stabilizes pieces of meat during a cutting action. Particularly, it may prevent that pieces of meat are removed from the accommodating space 204 when the cutting element is moved from the operational state to the non-operational state. The stabilizing structure 310 is arranged at a predetermined distance with respect to the endless conveyor. Said distance at least allowing a meat-carrier 204 to be transported underneath said stabilizing structure 310. Figure 5 shows the same detailed perspective, but wherein the cutting section 300 is positioned in the non-operational state. This can be seen by the cutting elements 304 being positioned at a distance from the meat carriers 203 and the transport path. During this positioned the conveyor may displace the meat carriers 203 such as to align a new meat carrier 203, comprising unprocessed pieces of meat, with the cutting section 300. In this non-operational state it can be clearly seen that the meat carriers 203 are transported beneath the stabilizing structure 310, and the stabilizing structure 310 comprising a plurality of cutting recesses 311. Said cutting recesses 311 are aligned and parallel with the cutting elements 304 such as to allow them to pass through the cutting recesses 311.

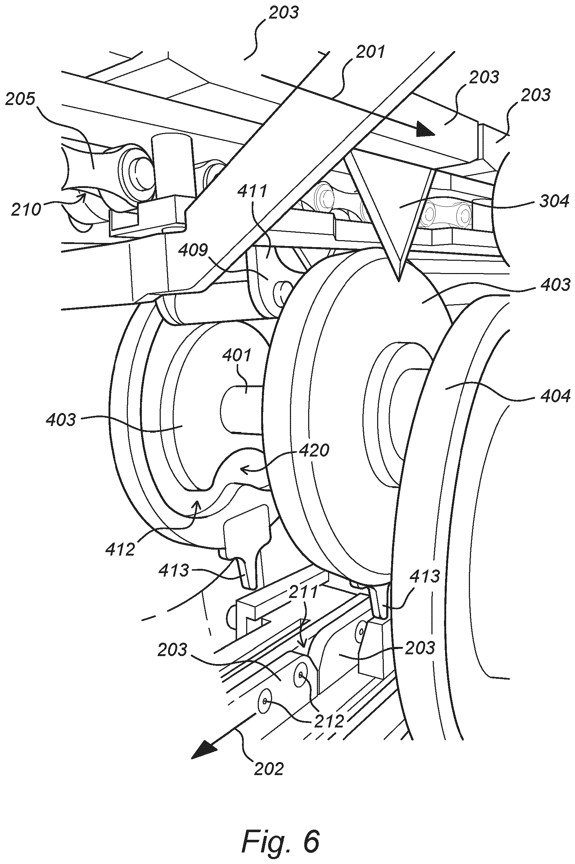

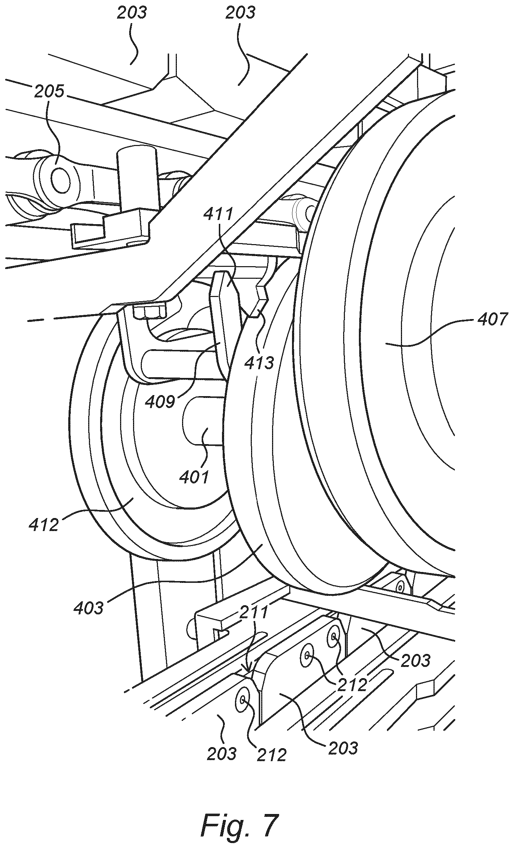

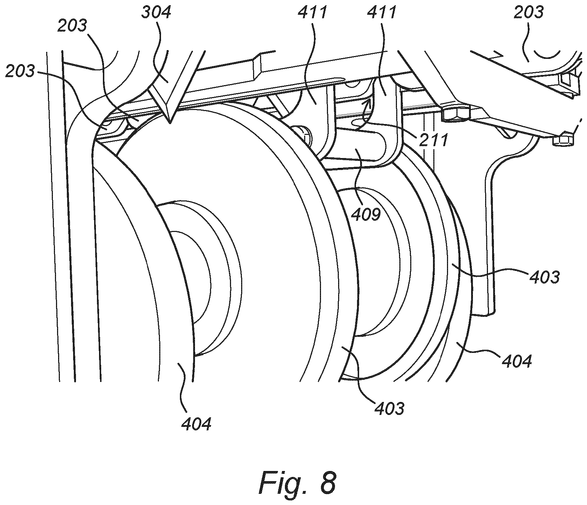

Figure 6 shows a part of the drive system 400 and a part of the conveyor. The figure indicates part of the upper run 201 and part of the lower run 201 of the conveyor. Along the upper run 201 a shackle 205 of the chain of the endless belt is visible. Said shackle comprising an opening 201 for co-action with a tooth 413 of the primary drive cam 403 attached to the driven axle 401. Above the endless belt 205 at the upper run 201 a plurality of meat carriers 203 is shown. The cutting section is in the operational state, as can be seen by the cutting element 304 extending partially through a meat carrier 203 which is aligned with the cutting section 300. In this position, the retaining element 409, in particular a contact element 411 is in contact with a part of the conveyor in particular a part of a meat carrier 203, more in particular a space between two meat carriers. This space 211 is seen in the bottom side of the meat carriers 203 visible along the lower run 202 in this figure. The contact element 411 may be partially accommodated in said space 211 when the retaining element 409 is in the retaining state. This figure further depicts the primary cams 403, wherein an inwardly facing face of the primary cams 403 comprises a guiding slot 412. Said guiding slot 412 having a non-circular shape for actuating of the retaining element 409. To this end, the guiding slot 412 comprises at least one dimpled portion 420. When a follower arranged in the slot 412 and connected to the retaining element 409 is moved along this portion 420 the retaining element is, temporarily moved into the releasing state such that the contact element 411 is temporarily removed from the space 211 between meat carriers 203. This state is shown in more detail in figure 7. The meat carriers 203 may be attached to the endless belts, in particular the chains 205. This may be done via one or more mounting elements 212. Figure 7 shows the same detailed perspective, but during the intermittent drive of the belt 205. It can be seen that the retention element 409, in particular a contact element 411 is released from the space 211 between meat carriers 203, hence allowing movement of the endless belt 205. It can be seen that the tooth 413 of the primary cam 403 is engaged with the endless belt 205 such as to move the belt 205. Figure 8 depicts a detail of the drive mechanism 400 according to an embodiment of the present invention. What can particularly be seen is that the contact portion 411 of the retaining element 409 is in contact, or accommodated, in a space 211 between two meat carriers 203. Hence, the retaining element both supports the meat carriers 203 but also limits a movement of the conveyor. Said contact portion 411 engages with the space 211 between meat carriers 203 along the upper run. Said space 211 is arranged at the lower side of the upper run.

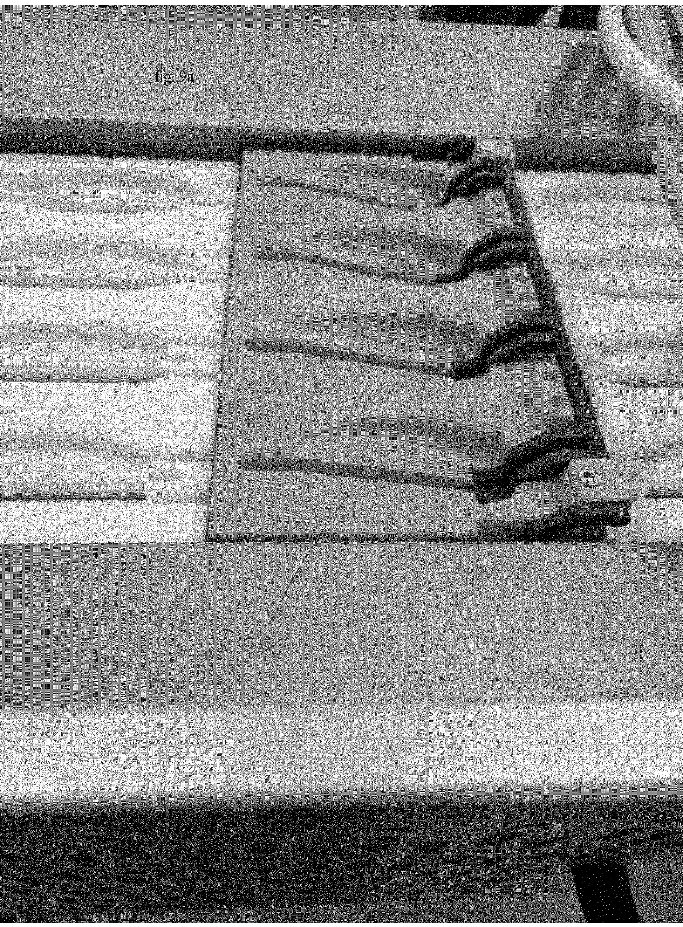

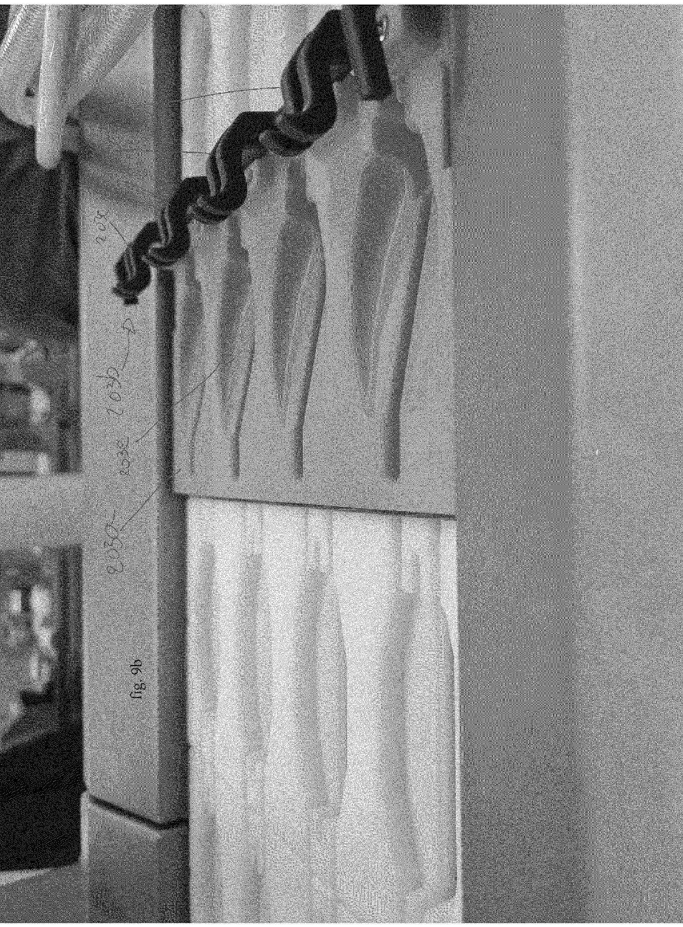

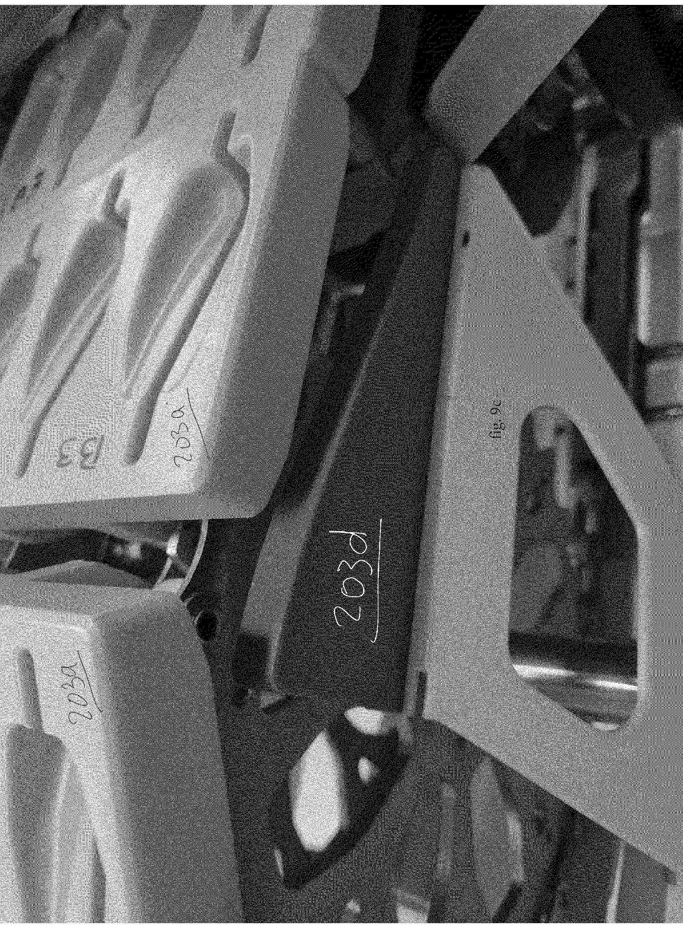

Figures 9a, 9b, 9c show an alternative and/or additional meat carrier 203a, comprising a meat ejector 203b. The meat ejector 203b is preferably configured for ejecting the meat from the carrier 203a, in particular from the recess or deepened portion of said carrier. It is preferred that the meat ejector is configured to contact at least an upstream or downstream portion of the meat accommodated in the carrier. In the shown embodiment, the meat ejector 203b is movably coupled to the carrier. The meat ejector 203b is arranged rotatable with respect to the carrier 203a. The embodiment of the meat ejector 203b shown is rotatably coupled to the carrier around a rotational axis which is perpendicular to the transport path. The meat ejector 203b comprises a shaft 203s and one or more ejector elements 203c, of which said shaft coincides with the rotational axis. In the embodiment shown, multiple ejector elements 203c are coupled to the shaft 203s and each extend into a respective recess or deepened portion 203e of the carrier 203a. The ejector element 203c can be arranged in proximity of a cutting slot, particularly adjacent to (both longitudinal sides of) the cutting slot. The meat ejector 203a is movable between the shown idle state and an activated state. Figure 9a shows the meat ejector 203b in an idle state, wherein the ejector element 203c is accommodated in the meat recess, for maintaining a position of the meat in the meat recess. Figure 9b shows an activated state, wherein at least the ejector element is shifted or moved out of the meat recess. In the shown embodiment, the meat ejector, in particular the ejector element, is activated by a cam on or adjacent to the transport path. Said cam 203d is shown in figure 9c. In figure 9c the meat ejector 203b is not shown. This is for illustrative purposes. The cam 203d can be positioned near a return from the upper stretch to the lower stretch. Said cam is configured to trigger a cam follower (not shown) which can be coupled to the meat ejector 203b. Said cam causes a movement of the cam follower of the meat ejector 203b which causes a rotation of the meat ejector from the idle state to the activated state for removing of pieces of meat accommodated in the recess 203e. Said meat ejector may be resiliently rotatably coupled to the carrier, such that the meat ejector is automatically urged towards an idle position. The above-described inventive concepts are illustrated by several illustrative embodiments. It is conceivable that individual inventive concepts, including inventive details, may be applied without, in so doing, also applying other details of the described example. It is not necessary to elaborate on examples of all conceivable combinations of the above-described inventive concepts, as a person skilled in the art will understand numerous inventive concepts can be (re)combined in order to arrive at a specific application and/or alternative embodiment.

The ordinal numbers used in this document, like "first", "second", and "third" are used only for identification purposes. Hence, the use of expressions like a "second" component, does therefore not necessarily require the co-presence of a "first" component. By "complementary" or "co-acting" components is meant that these components are configured to co-act with each other. However, to this end, these components do not necessarily have to have complementary forms. The verb "comprise" and conjugations thereof used in this patent publication are understood to mean not only "comprise", but are also understood to mean the phrases "contain", "substantially consist of", "formed by" and conjugations thereof.

## Claims

1. Device for cutting pieces of meat, preferably pieces of poultry, in particular poultry mid-wings, into separate portions, comprising:
- at least one endless conveyor for transporting pieces of meat, preferably pieces of poultry, in particular poultry mid-wings, along a transport path,
- at least one cutting section arranged along the along the transport path of the endless conveyor, said cutting section comprising at least one movable cutting element for cutting pieces of meat transported along the transport path into separate portions, wherein at least one cutting element is at least movable in a direction having at least a directional component perpendicular to the transport path,
- at least one first intermittent-motion drive system for intermittently driving the endless conveyor.

2. Device according to claim 1, wherein the at least one movable cutting element is displaceable between an operational state, wherein the cutting element is configured to intersect the transport path and/or a part of the conveyor to cut meat into separate portions, and an non-operational state, wherein the cutting element is positioned at a distance from the transport path and/or a part of the conveyor.

3. Device according to claim 2, wherein the device comprises at least one second drive system for, preferably continuously or intermittently, moving the at least one cutting element between the operational state and the non-operational state.

4. Device according to claim 3, wherein the first drive system and the second drive system are configured to mutually synchronize the movement of the at least one cutting element and the intermittent movement of the endless conveyor, preferably wherein the first intermittent-motion drive system is configured to periodically, temporarily interrupt movement of the endless conveyor, and wherein the second drive system is configured to position the at least one cutting element into the operational state when the endless conveyor is in an interrupted state, and to position the at least one cutting element into the non-operational state if the endless conveyor is not in an interrupted state.

5. Device according to any of the preceding claims, wherein the first drive system and the second drive system are configured to mutually cooperate with each other and/or wherein the first drive system and the second drive system are at least partially integrated, and wherein the device optionally comprises at least one control unit to synchronize the first drive system and the second drive system.

6. Device according to any of the claims 3-5, wherein the first drive system and the second drive system are the same drive system.

7. Device according to any of the preceding claims, wherein said endless conveyor comprises at least one endless belt, such as a chain, preferably at least two endless belts, such as at least two chains, oriented in parallel and preferably spaced apart.

8. Device according to claim 7, wherein said endless belt conveyor comprises an upper run and a lower run, wherein intermediate space is defined between the upper run and the lower run, and wherein at least a part of said upper run defines the transport path of the pieces of meat, and/or wherein said belt conveyor comprises at least one belt return device facilitating transitioning of the endless belt between the lower run and the upper run, and/or wherein said belt return device comprises at least one guide sprocket, preferably at least one non-driven guide sprocket.

9. Device according to any of claims 8, wherein at least a part of said at least one first intermittent-motion drive system is positioned within said intermediate space.

10. Device according to any of claims 8-9, wherein at least a part of said at least one first intermittent-motion drive system is configured to co-act with, in particular to intermittently drive, a lower side of said upper run of the endless belt conveyor.

11. Device according to any of the preceding claims, wherein the conveyor comprises a plurality of a meat carriers, wherein each meat carrier is configured to accommodate at least one piece of meat.

12. Device according to claim 11, wherein the conveyor comprises an endless belt, wherein the meat carriers are affixed to at least one endless belt of the conveyor, and wherein at least one meat carrier comprises at least one meat ejector

13. Device according to claim any of claims 8-10 and any of claims 11-12, wherein a front section, in particular an upstream section, of at least one meat carrier is pivotably connected to said at least one endless belt, and wherein a back section, in particular a downstream section, of said meat carrier is unconnected to said at least one endless belt.

14. Device according to any of the preceding claims, wherein the first drive system and/or the second drive system comprise a single drive motor, preferably an electric drive motor.

15. Method for cutting pieces of meat, preferably pieces of poultry, in particular poultry mid-wings, into separate portions, preferably by using the device according to any of the claims 1-14, comprising the steps of:
a) positioning or loading one or more pieces of meat to be cut, directly or indirectly, onto an endless conveyor of a meat cutting device,
b) intermittently driving the endless conveyor by using an intermittent-motion drive system such that said one or more pieces of meat are displaced in a transport direction, wherein the movement of the endless conveyor is alternately moved and interrupted by said drive system,
c) cutting, in an interrupted state of the conveyor, at least one piece of meat into separate pieces, by mechanically moving, preferably automatedly moving, at least one cutting element of a cutting section of said meat cutting device towards and into said at least one piece of meat aligned with said at least one cutting element, followed by a movement of the at least one cutting element away from the cut meat and the conveyor,
d) removing, preferably automatedly removing, the cut meat from the endless conveyor downstream of the cutting section,
e) periodically repeating at least steps a)-d).

16. Method according to claim 15, wherein the conveyor is brought into motion again after step c), optionally further comprising the step of b1) reducing, preferably gradually reducing, a driving speed of the drive system prior to step c).
